# EUROPEAN PATENT APPLICATION

(11) **EP 4 322 077 A1**
(43) Date of publication of application: **14.02.2024**
(21) Application number: 22190195.2
(22) Date of filing: 12.08.2022
(51) Int. Cl.: G06Q 10/04, G06Q 10/083, G06Q 50/30

(54) **METHOD FOR OPTIMIZING GROUPAGE TRANSPORT**

(71) Applicant: Click Safe Robotics B.V., 7547 TN Enschede (NL)
(72) Inventor: Wevers, Pim Thomas, Losser (NL)
(74) Representative: 't Jong, Bastiaan Jacob

(57) **Abstract**

The invention relates to a method for safe optimizing groupage transport, which method comprises the steps of:
(a) providing at least one vehicle having a cargo space with a main floor, walls surrounding the main floor and a ceiling, wherein a plurality of distance sensors is arranged to and distributed over the ceiling, which distance sensors are directed towards the main floor;
(b) loading an amount of goods at a first pickup location into the cargo space;
(c) after loading of the amount of goods measuring with the plurality of distance sensors the height profile of the main floor and all the goods in the cargo space to determine the floor space occupied by the loaded amount of goods and the height of the loaded amount of goods;
(d) while driving with the at least one vehicle to a second pickup location matching, based on the determined occupied floor space and height of the goods, combinations of some of all the goods in the cargo space, which could be positioned over each other to clear main floor space;
(e) at the second pickup location rearranging the cargo space by positioning partial sub floors at a height depending on the the matched combination of goods and positioning one good of the matched combination on the main floor under the partial sub floor and positioning the other good of the matched combination on the partial sub floor.

## Description

The invention relates to a method for optimizing groupage transport. With groupage transport goods are collected at a number of pickup locations with a single vehicle and then transported to, for example, another country, where the goods are distributed to a number of locations.

In order to optimize the groupage transport, the goods could be transported to a central location, where also a number of other vehicles arrive and where the goods of all vehicles are redistributed over the vehicles to optimize the transport to the destination location.

Clients typically supply the goods on standardized pallets and typically inform the transportation company only on the amount of pallets to be transported. The height of such pallets is not communicated or is only estimated. As a result, it could occur that picked up goods only have a height of for example 1 meter, while the cargo space of the vehicle has a height of about 2,7 meters. As pallets with goods cannot stacked directly on top of each other, especially goods of different clients, the pallets are positioned next to each other on the main floor.

In order to make more efficient use of the cargo space for groupage transport, it is known to temporarily arrange a partial sub floor in the cargo space, such that pallets of low height can be positioned over each other. Apart from a more efficient use of the cargo space, the use of partial sub floors also reduces the risk of damaging the goods compared to when the goods would be stacked directly on top of each other. The decision to use such partial sub floors is however dependent on the driver of the vehicle and furthermore the central planner needs to know that by using a partial sub floor main floor space is cleared in the vehicle and that additional cargo could be picked up at a next pickup location.

In practice substantial cargo space is left unused either because the driver does not use partial sub floors or fails to match a combination of goods, which could be positioned over each other, or the central planner fails to direct the vehicle to more efficient pickup locations, where goods could be picked up to make more efficient use of the cargo space.

If the cargo space of a vehicle would be used more efficiently, especially for long range transportation, such as between countries, the transportation cost could be reduced. In addition, the pollution per pallet or goods could be reduced, such that a contribution is made to the improvement of the environment. When the efficiency could be increased, a lower number of vehicles is required to transport the same amount of goods. This reduces the CO₂ emissions per good or pallet.

CN 210502432U discloses a trailer with a cargo space in which distance sensors are arranged. Depending on a threshold the distance sensors detect the occupancy of part of the main floor of the cargo space or not. This allows for detection whether there is space for additional pallets with goods on the the main floor.

US 2004140886 discloses a system with a camera to detect whether goods are loaded or unloaded from the cargo space of a trailer. The publication mentions the use of ultrasonic sensors at the ceiling of the cargo space, but considers such sensors not cost effective. The camera system is exclusively used to detect the occupancy of the main floor of the cargo space and is not used to determine the height of the cargo.

US 11299219 describes a cargo trailer in which sensors are arranged to the ceiling to detect the height of a detection zone. Based on the detected height it is determined if the main floor of the cargo space is occupied. It is also calculated with the detected height, which volume of the cargo space is occupied. This volume can be used in combination with information on the goods to calculate the weight of the cargo. Based on this information the central hub can divert a vehicle to another pick up location to pick up additional goods.

It is an object of the invention to reduce or even remove the above mentioned disadvantages.

This object is achieved with a method according to the invention, which method comprises the steps of:
(a) providing at least one vehicle having a cargo space with a main floor, walls surrounding the main floor and a ceiling, wherein a plurality of distance sensors is arranged to and distributed over the ceiling, which distance sensors are directed towards the main floor;
(b) loading an amount of goods at a first pickup location into the cargo space;
(c) after loading of the amount of goods measuring with the plurality of distance sensors the height profile of the main floor and all the goods in the cargo space to determine the floor space occupied by the loaded amount of goods and the height of the loaded amount of goods;
(d) while driving with the at least one vehicle to a second pickup location matching, based on the determined occupied floor space and height of the goods, combinations of some of all the goods in the cargo space, which could be positioned over each other to clear main floor space;
(e) at the second pickup location rearranging the cargo space by positioning partial sub floors at a height depending on the the matched combination of goods and positioning one good of the matched combination on the main floor under the partial sub floor and positioning the other good of the matched combination on the partial sub floor.

With the method according to the invention the height of the goods is used to determine whether goods could be positioned over each other by arranging a partial sub floor in the cargo space. With the method according to the invention, the choice to arrange a partial sub floor in the cargo space and position cargo under and on top of the partial sub floor is no longer dependent on the willingness and expertise of the driver. It also allows for an easy optimization of the available cargo space, which would otherwise be difficult to oversee by the driver. For example, if a large number of pallets with a height of around half the height of the cargo space are placed in the cargo space, it is difficult to see, which combination of pallets would result in an optimal use of the cargo space and at which heights one or more partial sub floors should be arranged.→

With the method according to the invention, in which the height of each good is measured and by allowing this information to be processed during the trip to the second pickup location, there is sufficient time to calculate an optimal set of combinations of goods and heights of partial sub floors.

Typically this optimization process is performed on a computer system, which can take into account a number of parameters, including the height of the goods and the foot print of the goods. This foot print of the goods could be measured with the sensors, or could be provided by the customer at the moment when a shipment is announced. Typically the goods are stacked on a standardized pallet, such that the foot print is well known.

In a preferred embodiment of the method according to the invention the method further comprises the step of repeating steps (a) - (e) until the main floor space is fully occupied.

As the method is in particular for groupage transport, the vehicle will visit a number of pickup locations. After loading goods at each pickup location, the change in the cargo space can be measured by the sensors and a recalculation of the optimal combination of goods can be determined, such that the cargo space is optimally filled with goods.

In a further embodiment of the method according to the invention some of the goods in the cargo space are unloaded at the second pickup location.

Depending on the destination of the goods, said goods could be unloaded at a second pickup point. This could either be an end destination for the goods, or the goods could be transferred onto a second vehicle, if it is determined that such a transfer would further increase the efficiency, reducing costs and pollution.

Preferably, the goods are stacked onto standardized pallets. Using standardized pallets makes it easier to determine the occupancy of the main floor space of the goods with less sensors.

In yet another preferred embodiment of the method according to the invention the data of the measurements with the plurality of distance sensors of the height profile of the main floor and all the goods in the cargo space is send to a central hub, wherein the central hub receives the data of a number of vehicles,
wherein the central hub matches for a vehicle, based on the determined occupied floor space and height of the goods, combinations of some of all the goods in the cargo space, which could be positioned over each other to clear main floor space; and
wherein the central hub sends the matched combinations back to said vehicle.

Processing the data at a central hub allows for a quicker calculation of combinations of goods as more computer power could be used, then when the computer power should be present in the vehicle. It furthermore allows for taking into consideration the data of other vehicles and dynamically route a number of vehicles between a plurality of pickup locations. This will further reduce costs and pollution as more goods can be transported in one vehicle and therefore less vehicles, i.e. less pollution is required, to transport goods from one location to another.

In still a further preferred embodiment of the method according to the invention the central hub determines the second pickup location for a vehicle based on the received data of said vehicle and the received data of other vehicles.

These and other features of the invention will be elucidated in conjunction with the accompanying drawings.
Figure 1 shows schematically a trailer with a cargo space at a first pickup location after loading an amount of goods according to the method of the invention.
Figure 2 shows schematically the trailer of figure 1 at a second pickup location after the cargo space has been arranged according to the method of the invention.

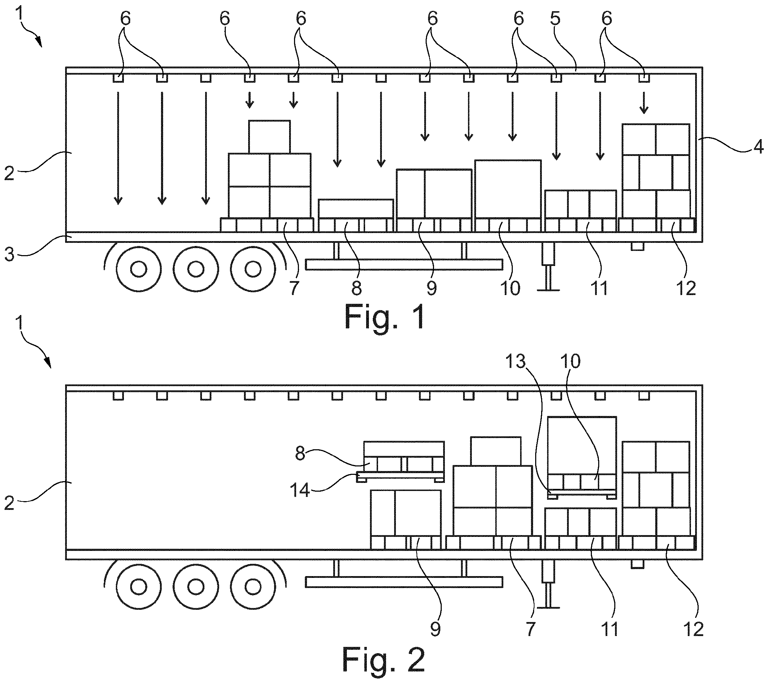

Figure 1 shows schematically the method of the invention, in which a trailer 1 is provided. The trailer 1 has a cargo space 2 with a main floor 3, surrounding walls 4 and a ceiling 5. The ceiling 5 is provided with a plurality of distance sensors 6, such as ultrasonic sensors or laser time of flight sensors.

According to the method of the invention, the trailer 1 has been loaded with an amount of goods, which are positioned on pallets 7, 8, 9, 10, 11, 12.

The sensors 6 measure each the distance to the top of the goods on the pallets 7 - 12 and as a result determine the height of the goods.

These measurements are evaluated while the trailer 1 is transported to a second pickup location, in order to determine combinations of pallets 7 - 12 with goods, which could be positioned over each other to clear main floor space 3.

At the second pickup location (see figure 2), the driver is instructed which pallets 7 - 12 could be combined by using a partial sub floor 13, 14 and at which height these sub floors 13, 14 should be arranged in the cargo space 2.

As shown in figure 2, the combination of pallets 8 and 9 could be positioned over each other as well as the pallets 10, 11 by applying the partial sub floors 13,14.

As clear from a comparison of figures 1 and 2, an substantial amount of main floor space 3 is cleared, such that more pallets with goods could be loaded at the second pickup location, than would be possible with the positioning of pallets shown in figure 1.

## Claims

1. Method for optimizing groupage transport, which method comprises the steps of:
(a) providing at least one vehicle having a cargo space with a main floor, walls surrounding the main floor and a ceiling, wherein a plurality of distance sensors is arranged to and distributed over the ceiling, which distance sensors are directed towards the main floor;
(b) loading an amount of goods at a first pickup location into the cargo space;
(c) after loading of the amount of goods measuring with the plurality of distance sensors the height profile of the main floor and all the goods in the cargo space to determine the floor space occupied by the loaded amount of goods and the height of the loaded amount of goods;
(d) while driving with the at least one vehicle to a second pickup location matching, based on the determined occupied floor space and height of the goods, combinations of some of all the goods in the cargo space, which could be positioned over each other to clear main floor space;
(e) at the second pickup location rearranging the cargo space by positioning partial sub floors at a height depending on the the matched combination of goods and positioning one good of the matched combination on the main floor under the partial sub floor and positioning the other good of the matched combination on the partial sub floor.

2. Method according to claim 1, wherein the method further comprises the step of repeating steps (a) - (e) until the main floor space is fully occupied.

3. Method according to claim 1 or 2, wherein some of the goods in the cargo space are unloaded at the second pickup location.

4. Method according to any of the preceding claims, wherein the goods are stacked onto standardized pallets.

5. Method according to any of the preceding claims, wherein the data of the measurements with the plurality of distance sensors of the height profile of the main floor and all the goods in the cargo space is send to a central hub, wherein the central hub receives the data of a number of vehicles,
wherein the central hub matches for a vehicle, based on the determined occupied floor space and height of the goods, combinations of some of all the goods in the cargo space, which could be positioned over each other to clear main floor space; and
wherein the central hub sends the matched combinations back to said vehicle.

6. Method according to claim 5, wherein the central hub determines the second pickup location for a vehicle based on the received data of said vehicle and the received data of other vehicles.
